# EUROPÄISCHE PATENTSCHRIFT

(11) **EP 4 034 401 B1**
(45) Veröffentlichungstag und Bekanntmachung des Hinweises auf die Patenterteilung: **12.03.2025**
(21) Anmeldenummer: 20780125.9
(22) Anmeldetag: 21.09.2020
(51) Int. Cl.: B60K 1/02, B60K 17/02, B60K 17/28, B60K 25/06, B60K 23/00, B60K 17/06

(54) **VERFAHREN ZUM BETREIBEN EINES ANTRIEBSSTRANGS FÜR EINE ARBEITSMASCHINE, ANTRIEBSSTRANG FÜR EINE ARBEITSMASCHINE UND ARBEITSMASCHINE**
METHOD FOR OPERATING A DRIVETRAIN FOR A WORK MACHINE, DRIVETRAIN FOR A WORK MACHINE, AND WORK MACHINE
PROCÉDÉ D'ACTIONNEMENT D'UNE CHAÎNE CINÉMATIQUE POUR ENGIN DE CHANTIER, CHAÎNE CINÉMATIQUE POUR ENGIN DE CHANTIER, ET ENGIN DE CHANTIER

(30) Priorität: 23.09.2019 DE 102019214412
(43) Veröffentlichungstag der Anmeldung: 03.08.2022
(73) Patentinhaber: ZF Friedrichshafen AG, 88046 Friedrichshafen (DE)
(72) Erfinder: GLÖCKNER, Rico, 94060 Pocking (DE); JÄGER, Lukas, 88045 Friedrichshafen (DE)
(86) Internationale Anmeldenummer: PCT/EP2020/076284
(87) Internationale Veröffentlichungsnummer: WO 2021/058429

(56) Entgegenhaltungen:
- CN-A- 103 453 120
- CN-A- 106 828 064
- JP-A- 2013 141 875
- JP-A- 2013 141 955

## Beschreibung

Die vorliegende Erfindung betrifft ein Verfahren zum Betreiben eines Antriebsstrangs für eine Arbeitsmaschine gemäß dem Oberbegriff von Anspruch 1, einen Antriebsstrangs für eine Arbeitsmaschine gemäß dem Oberbegriff von Anspruch 8 sowie eine entsprechende Arbeitsmaschine.

Im Stand der Technik sind elektrisch angetriebene Arbeitsmaschinen, wie etwa Radlader, Kompaktlader, Teleskoplader, Dumper oder auch Bagger, bekannt. Derartige elektrisch angetriebene Arbeitsmaschinen sind entweder reinelektrisch angetrieben, d.h. sie verfügen für ihre Energieversorgung ausschließlich über eine elektrische Batterie bzw. einen elektrischen Akkumulator. Oder aber sie sind diesel-elektrisch angetrieben, was bedeutet, dass die benötigte Energie von einem dieselgetriebenen Generator, üblicherweise in Verbindung mit einem elektrischen Pufferspeicher, wie z.B. einem entsprechend dimensionierten Kondensator, bereitgestellt wird. In allen Fällen wird die für den Fahrantrieb und den Arbeitsantrieb benötigte mechanische Leistung von einem oder mehreren Elektromotoren erbracht. Weiterhin sind auch hybrid-elektrische Arbeitsmaschinen bekannt, bei denen die benötigte mechanische Leistung in erster Linie von einem Verbrennungsmotor, üblicherweise einem Dieselmotor, erbracht wird. Ein zusätzlich vorgesehener Elektromotor übernimmt hier typischerweise eine sog. Boost-Funktion.

Ebenfalls bekannt sind lastschaltbare Getriebe für Arbeitsmaschinen, bei denen während eines Schaltvorgangs eine Drehzahlsynchronisierung zwischen der Drehzahl eines Antriebsaggregats und der Drehzahl der einzulegenden Gangstufe erfolgt. Bei einem Hochschaltvorgang wird die Drehzahl des Antriebsaggregats entsprechend reduziert, bei einem Herunterschaltvorgang entsprechend erhöht.

In diesem Zusammenhang beschreibt die DE 20 2014 000 738 U1 einen rein elektromotorisch angetriebener Radlader, der einen ersten Elektromotor für einen Fahrantrieb und einen zweiten Elektromotor für einen Arbeitsantrieb aufweist.

Aus der EP 0 962 597 A2 ist eine batteriebetriebene Arbeitsmaschine bekannt, welche für den Fahrantrieb zwei Elektromotoren aufweist und einen weiteren Elektromotor für den Arbeitsantrieb aufweist. Die zwei Elektromotoren für den Fahrantrieb sind in die Vorderachse integriert, wobei jeder Elektromotor ein Rad antreibt.

Aus der DE 10 2010 063 503 A1 ist ferner ein Mehrstufengetriebe einer Arbeitsmaschine in Planetenbauweise bekannt. Das Mehrstufengetriebe umfasst ein Gehäuse, in welchem vier Planetensätze und mehrere Wellen aufgenommen sind, sowie Schaltelemente, welche durch zumindest eine Bremse und Kupplungen gebildet sind und mittels deren gezielter Betätigung acht verschiedene Übersetzungsverhältnisse zwischen einer Antriebs- und einer Abtriebswelle darstellbar sind. Das Getriebe der DE 10 2010 063 503 A1 ermöglicht eine Lastschaltbarkeit.

Die JP 2013 141 875 A offenbart einen elektrischen Traktor mit einem elektrischen Fahrmotor und einem elektrischen Arbeitsmotor. Der Fahrmotor ist dazu ausgebildet, eine Fahrvorrichtung des Traktors anzutreiben und der Arbeitsmotor ist dazu ausgebildet, eine Zapfwelle des Traktors anzutreiben. Über Antriebsübertragungsmittel kann der Arbeitsmotor zusätzlich auch die Fahrvorrichtung des Traktors antreiben.

Aus der CN 106 828 064 A ist ein zweimotoriges Antriebssystem eines elektrischen Traktors bekannt. Das Antriebssystem umfasst eine elektromagnetische Kupplung, einen A-Motor und einen B-Motor. Der Traktor wird durch den A-Motor und den B-Motor angetrieben, wobei nach einem Schalten der Gänge die beiden Motoren miteinander gekoppelt sind. Die Antriebsleistung der Motoren wird über ein Getriebe an den Fahrzeugrädern bereitgestellt.

Die bekannten elektrisch angetriebenen Arbeitsmaschinen sind jedoch dahingehend nachteilbehaftet, als dass eine Drehzahlsynchronisierung der beteiligten Gangstufen bei einem Schaltvorgang unter Last, insbesondere bei einer Zugrückschaltung, gegenüber einem identischen Schaltvorgang bei einer verbrennergetriebenen Arbeitsmaschine erschwert ist. Die Ursache hierfür liegt einerseits im vergleichsweise größeren Trägheitsmoment eines Elektromotors gegenüber einem Verbrennungsmotor, vor allem aber im deutlich größeren Drehzahlspektrums des Elektromotors, wodurch auch vergleichsweise höhere Differenzdrehzahlen vorliegen können. Dies macht üblicherweise eine entsprechend größere und leistungsstärkere Dimensionierung der Kupplungen in elektrisch angetriebenen Arbeitsmaschinen notwendig. Eine solche vergleichsweise größere und leistungsstärkere Auslegung der Kupplung bedingt jedoch einen erhöhten Bauraumbedarf, ein erhöhtes Gewicht sowie erhöhte Herstellungskosten. Weiterhin weisen vergleichsweise größere Kupplungen auch vergleichsweise größere Schleppmomente und Reibungsverluste auf.

Es ist eine Aufgabe der Erfindung, ein verbessertes Verfahren zum Betreiben eines Antriebsstrangs für eine Arbeitsmaschine vorzuschlagen.

Diese Aufgabe wird erfindungsgemäß durch das Verfahren zum Betreiben eines Antriebsstrangs für eine Arbeitsmaschine gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zum Betreiben eines Antriebsstrangs für eine Arbeitsmaschine, wobei ein erster Elektromotor über eine erste Getriebeanordnung einen Arbeitsantrieb der Arbeitsmaschine antreibt, wobei ein zweiter Elektromotor über eine zweite Getriebeanordnung einen Fahrantrieb der Arbeitsmaschine antreibt und wobei während eines Schaltvorgangs der zweiten Getriebeanordnung aus einer höheren Gangstufe in eine niedrigere Gangstufe eine Drehzahlerhöhung des zweiten Elektromotors erfolgt. Das erfindungsgemäße Verfahren zeichnet sich dadurch aus, dass während des Schaltvorgangs über eine erste Kupplung eine Triebverbindung zwischen dem ersten Elektromotor und dem Fahrantrieb hergestellt wird, so dass der Fahrantrieb während des Schaltvorgangs vom ersten Elektromotor angetrieben wird.

Bei einem Schaltvorgang aus einer höheren Gangstufe in eine niedrigere Gangstufe muss der erste Elektromotor, welcher dem Fahrantrieb zugeordnet ist, sehr schnell seine Drehzahl erhöhen muss, um die für den Schaltvorgang notwendige Drehzahlsynchronisierung zwischen den am Schaltvorgang beteiligten Kupplungselementen herzustellen. Diese Drehzahlsynchronisierung erfolgt gemäß dem Stand der Technik über entsprechende Reibungsarbeit zwischen den am Schaltvorgang beteiligten Kupplungselementen, wobei insbesondere bei Elektromotoren vergleichsweise hohe Drehzahldifferenzen auftreten, was nachteilig durch besonders leistungsfähige und damit schwere und teure Kupplungen ausgeglichen werden muss. Hinzu kommt die zur Drehzahlbeschleunigung des zweiten Elektromotors aufzubringende Arbeit, welche wegen des vergleichsweise großen Massenträgheitsmoments sowie der vergleichsweise hohen Drehzahldifferenz entsprechend groß ist.

Hier setzt das erfindungsgemäße Verfahren an: Indem es vorteilhaft ermöglicht wird, den Fahrantrieb während des Schaltvorgangs der zweiten Getriebeanordnung vom ersten Elektromotor, welcher eigentlich dem Arbeitsantrieb zugeordnet ist, antreiben zu lassen, kann der zweite Elektromotor trieblich vom Fahrantrieb getrennt werden, so dass seine gesamte bereitstellbare Leistung weitestgehend dazu verwendet werden kann, seine eigene Drehzahl möglichst schnell zu erhöhen. Währenddessen kann die notwendige Zugkraft vom ersten Elektromotor aufgebracht werden, so dass während des Schaltvorgangs keine Zugkraftunterbrechung auftritt.

Unter einem Schaltvorgang aus einer höheren Gangstufe in eine niedrigeren Gangstufe wird im Sinne der Erfindung ein Schaltvorgang aus einer Gangstufe, die eine vergleichsweise höhere Ausgangsdrehzahl und ein vergleichsweise geringeres Ausgangsdrehmoment aufweist, in eine Gangstufe, die eine vergleichsweise geringere Ausgangsdrehzahl und ein vergleichsweise höheres Ausgangsdrehmoment aufweist, verstanden.

Die zur Drehzahlsynchronisierung notwendige Drehzahlerhöhung des zweiten Elektromotors kann bevorzugt dadurch erreicht werden, dass der zweite Elektromotor während des Schaltvorgangs kurzfristig vom Fahrantrieb getrennt wird und während der Trennung vom Fahrantrieb seine Drehzahl entsprechend erhöht. Während der Trennung des zweiten Elektromotors wird der Fahrantrieb bevorzugt vom ersten Elektromotor angetrieben.

Denkbar und bevorzugt ist auch nicht nur das Bereitstellen eines einzelnen ersten bzw. zweiten Elektromotors, sondern auch mehrerer erster bzw. zweiter Elektromotoren, die z.B. über ein Summiergetriebe miteinander gekoppelt sein können oder über jeweils einzelne Triebanbindungen trieblich lösbar mit der ersten bzw. zweiten Getriebeanordnung verbunden sein können.

Bevorzugt weist zumindest die zweite Getriebeanordnung eine Vielzahl von als Vorwärtsgänge und mindestens eine als Rückwärtsgang ausgebildete Gangstufe auf. Besonders bevorzugt entspricht die Zahl der Vorwärtsgänge der Zahl der Rückwärtsgänge. Auch die erste Getriebeanordnung kann mehr als nur eine als Vorwärtsgang ausgebildete Gangstufe aufweisen. Darüber hinaus sind auch eine oder mehrere als Rückwärtsgang ausgebildete Gangstufen der ersten Getriebeanordnung denkbar. Aufgrund der Fähigkeit von Elektromotoren, ihre Drehrichtung zu ändern, ist das Bereitstellen von Rückwärtsgängen allerdings nicht immer erforderlich.

Gemäß einer bevorzugten Ausführungsform der Erfindung ist es vorgesehen, dass der Schaltvorgang unter Last ausgeführt wird. Der Begriff "unter Last" bezeichnet dabei im Sinne der Erfindung einen Zustand des Antriebsstrangs, bei dem ein Drehmoment vom zweiten Elektromotor, bzw. während des Schaltvorgangs auch vom ersten Elektromotor, an den Fahrantrieb übertragen wird, so dass die Arbeitsmaschine beispielsweise eine Beschleunigung erfährt oder eine Hangaufwärtsfahrt bei konstanter Geschwindigkeit durchführt. Ein Schaltvorgang unter Last ist somit ein Schaltvorgang ohne Unterbrechung der Zugkraft. Gerade während des Schaltvorgangs würde ohne Zurückgreifen auf das erfindungsgemäße Verfahren eine Unterbrechung in der Übertragung des Drehmoments erfolgen, sofern nicht gemäß dem Stand der Technik auf eine nachteilig große, teure und schwere Kupplung zurückgegriffen wird. Insofern zeigen sich die Vorteile des erfindungsgemäßen Verfahrens auch und vor allem bei einem Schaltvorgang unter Last, da dieser ohne Unterbrechung der Zugkraft und bei Vorhandensein einer vergleichsweise kleinen, kostengünstigen und leistungsschwachen Kupplung ermöglicht wird. In der Wirkung erzielt ein Antriebsstrang, in welchem das erfindungsgemäße Verfahren ausgeführt wird, somit die gleiche zugkraftunterbrechungsfreie Lastschaltbarkeit wie ein Antriebsstrang, der mit einer vergleichsweise großen, schweren und teuren Kupplung versehen ist.

Gemäß einer weiteren bevorzugten Ausführungsform der Erfindung ist es vorgesehen, dass der erste Elektromotor den Fahrantrieb und den Arbeitsantrieb während des Schaltvorgangs gleichzeitig antreibt. Daraus ergibt sich der Vorteil, dass auch der Arbeitsantrieb durch den Schaltvorgang nicht unterbrochen wird und kontinuierlich zur Verfügung steht. Es wird lediglich über die erste Kupplung eine Triebverbindung zwischen dem ersten Elektromotor und der zweiten Getriebeanordnung hergestellt, so dass während des Schaltvorgangs ein vom Fahrantrieb benötigter Leistungsbedarf zusätzlich zum Leistungsbedarf des Arbeitsantriebs vom ersten Elektromotor bereitgestellt wird.

Gemäß einer weiteren bevorzugten Ausführungsform der Erfindung ist es vorgesehen, dass eine bereitstellbare Leistung des ersten Elektromotors dazu herangezogen wird, Kupplungshälften einer der niedrigeren Gangstufe zugeordneten Kupplung zu synchronisieren. Dabei wird diejenige Kupplungshälfte synchronisiert, nämlich beschleunigt, welche der Antriebsseite des Antriebsstrangs zugeordnet ist. Die Beschleunigung der Kupplungshälfte erfordert einen nicht vernachlässigbaren Energieaufwand, welcher vom zweiten Elektromotor, der ja seine eigene Drehzahl beschleunigen muss, oftmals nicht mehr bereitgestellt werden kann.

Mit der Kupplungshälfte verbunden ist auch eine Reihe von weiteren Zahnrädern bzw. Wellen, welche die Triebverbindung vom ersten Elektromotor zur Kupplungshälfte herstellen. Diese Reihe von weiteren Zahnrädern bzw. Wellen ist bevorzugt weitestgehend identisch mit denjenigen Zahnrädern und Wellen, über welche nach dem Schaltvorgang die Triebverbindung vom zweiten Elektromotor zur Kupplungshälfte. Somit werden vorteilhaft auch diese Zahnräder und Wellen bereits vom ersten Elektromotor auf die benötigte Drehzahl gebracht.

Gemäß einer weiteren bevorzugten Ausführungsform der Erfindung ist es vorgesehen, dass eine bereitstellbare Leistung des zweiten Elektromotors dazu herangezogen wird, um eine Drehzahl des zweiten Elektromotors zu erhöhen. Indem die Beschleunigung der Kupplungshälfte durch den ersten Elektromotor erfolgt, kann die gesamte vom zweiten Elektromotor bereitstellbare Leistung zu dessen eigener Drehzahlanpassung aufgewandt werden, was in Folge zu einem insgesamt schnelleren Schaltvorgang führt, da alle beteiligten Elemente schneller die nötigen Drehzahlen erreichen.

Solange der zweite Elektromotor seine Drehzahl auf die für die einzulegende niedrigere Gangstufe notwendige Drehzahl beschleunigt, ist er bevorzugt vom Fahrantrieb wie auch vom Arbeitsantrieb entkoppelt. Ggf. kann jedoch eine geringe Anzahl von Zahnrädern oder Wellen, welche trieblich nicht vom zweiten Elektromotor trennbar sind, weiterhin mit dem zweiten Elektromotor verbunden sein und somit von diesem angetrieben bzw. beschleunigt werden.

Gemäß einer weiteren bevorzugten Ausführungsform der Erfindung ist es vorgesehen, dass der erste Elektromotor den Fahrantrieb nur insoweit antreibt, dass eine Leistungsdifferenz zwischen einer Leistungsanforderung des Fahrantriebs und einer vom zweiten Elektromotor während des Schaltvorgangs bereitstellbaren Leistung überbrückt wird. Dies bedeutet also, dass die vom ersten Elektromotor während des Schaltvorgangs bereitgestellte mechanische Leistung vorteilhaft exakt so weit erhöht wird, dass der Fahrantrieb durch den Schaltvorgang einerseits keine Leistungseinschränkung erfährt, aber andererseits auch keine unangeforderte Leistungssteigerung erfährt. Daraus ergibt sich der Vorteil, dass das Verhalten des Fahrantriebs durch den Schaltvorgang nicht beeinflusst wird. Eine z.B. von einem Bediener der Arbeitsmaschine für den Fahrantrieb angeforderte Leistung wird also auch während des Schaltvorgangs uneingeschränkt bereitgestellt, wozu die vom ersten Elektromotor bereitgestellte Leistung in dem Maße erhöht wird, wie die vom zweiten Elektromotor bereitgestellte Leistung aufgrund des Schaltvorgangs reduziert wird. Eine dem Fahrantrieb bereitgestellte Gesamtleistung bleibt jedoch erhalten.

Gemäß einer besonders bevorzugten Ausführungsform der Erfindung ist es vorgesehen, dass der erste Elektromotor den Fahrantrieb nur insoweit antreibt, dass einer Leistungsanforderung des Arbeitsantriebs während des Schaltvorgangs vollständig entsprochen werden kann. Daraus ergibt sich der Vorteil, dass in jedem Falle sichergestellt ist, dass der Arbeitsantrieb auch während des Schaltvorgangs die benötigte und von einem Bediener der Arbeitsmaschine angeforderte Leistung erhält, so dass ein plötzlicher und insbesondere für den Bediener unerwarteter Leistungseinbruch des Arbeitsantriebs vermieden werden kann. Ein für den Bediener unerwarteter Leistungseinbruch des Arbeitsantriebs könnte ansonsten zum Auftreten einer Gefahrensituation führen, beispielsweise wenn eine vom Arbeitsantrieb betriebene Hebevorrichtung der Arbeitsmaschine die zum Halten einer angehobenen Last notwendige Leistung nicht mehr erhält. Ein kurzzeitiger Leistungseinbruch im Fahrantrieb hingegen führt üblicherweise nicht zum Auftreten einer Gefahrensituation.

Dem vollständigen Entsprechen der Leistungsanforderung des Arbeitsantriebs durch den ersten Elektromotor kommt insbesondere Bedeutung in Situationen zu, in denen gleichermaßen vom Fahrantrieb wie auch vom Arbeitsantrieb vergleichsweise hohe Leistungsanforderungen gestellt werden, welche vom ersten Elektromotor in Summe jedoch nicht mehr bereitgestellt werden können. Wenn also die angeforderte Gesamtleistung die vom ersten Elektromotor maximal bereitstellbare Leistung übersteigt, wird zunächst die Anforderung des Arbeitsantriebs vollständig erfüllt. Eine verbleibende, noch bereitstellbare Restleitung des ersten Elektromotors wird dann dem Fahrantrieb während des Schaltvorgangs zur Verfügung gestellt.

Die Erfindung betrifft weiterhin einen Antriebsstrang für eine Arbeitsmaschine, umfassend einen ersten Elektromotor und einen zweiten Elektromotor sowie eine erste Getriebeanordnung und eine zweite Getriebeanordnung wobei der erste Elektromotor und die erste Getriebeanordnung einem Arbeitsantrieb der Arbeitsmaschine zugeordnet sind und wobei der zweite Elektromotor und die zweite Getriebeanordnung einem Fahrantrieb der Arbeitsmaschine zugeordnet sind. Der erfindungsgemäße Antriebsstrang zeichnet sich dadurch aus, dass über eine erste Kupplung zwischen dem ersten Elektromotor und dem Fahrantrieb eine Triebverbindung herstellbar ist. Der erfindungsgemäße Antriebsstrang umfasst somit vorteilhaft alle notwendigen Vorrichtungen und Mittel, um das erfindungsgemäße Verfahren ausführen zu können. Dies wiederum führt zu den bereits im Zusammenhang mit dem erfindungsgemäßen Verfahren beschriebenen Vorteilen.

Um eine möglichst optimale Ausführung des erfindungsgemäßen Verfahrens durch den erfindungsgemäßen Antriebsstrang zu gewährleisten, sind der erste Elektromotor und der zweite Elektromotor bevorzugt hinsichtlich ihrer bereitstellbaren Leistung sowie ihrer Drehmoment/Drehkennzahl-Kennlinie aufeinander abgestimmt. Das bedeutet, dass die vom ersten Elektromotor maximal bereitstellbare Leistung sich vorteilhaft in einem Bereich von 50 % bis 150 % der vom zweiten Elektromotor maximal bereitstellbaren Leistung bewegt, insbesondere in einem Bereich von 80 % bis 120 %. Darüber hinaus bewegt sich die Drehmoment/Drehkennzahl-Kennlinie des ersten Elektromotors vorteilhaft in einem Bereich von 50 % bis 150 % Drehmoment/Drehkennzahl-Kennlinie des zweiten Elektromotors, insbesondere in einem Bereich von 80 % bis 120 %.

Besonders bevorzugt ist es vorgesehen, dass der erste Elektromotor eine bereitstellbare Leistung von weniger als 100 % der vom zweiten Elektromotor bereitstellbaren Leistung aufweist, dafür jedoch eine höhere Dynamik aufweist, also die Fähigkeit zur vergleichsweise schnelleren Drehzahlanpassung durch Drehzahlbeschleunigungen oder Drehzahlverringerungen.

Bevorzugt umfasst der Antriebsstrang weiterhin zur Ansteuerung bzw. Regelung der Drehzahl bzw. des Drehmoments bzw. der bereitzustellenden Leistung des ersten Elektromotors und des zweiten Elektromotors jeweils eine eigene Leistungselektronik oder eine einzelne gemeinsame Leistungselektronik. Ebenso bevorzugt umfasst der Antriebsstrang ein elektronisches Steuergerät, welches den ersten Elektromotor und den zweiten Elektromotor über die jeweils eine eigene Leistungselektronik oder über die gemeinsame Leistungselektronik steuert bzw. regelt.

Gemäß einer bevorzugten Ausführungsform der Erfindung ist es vorgesehen, dass der erste Elektromotor und der zweite Elektromotor in einem gemeinsamen Gehäuse angeordnet sind. Dies ermöglicht eine platz- und gewichtsparende Anordnung des ersten Elektromotors und des zweiten Elektromotors innerhalb des Antriebsstrangs in einer Arbeitsmaschine. Zudem werden durch das gemeinsame Gehäuse im Vergleich zu zwei Einzelgehäusen Gewicht und Kosten eingespart. Der erste und der zweite Elektromotor können beispielsweise axial hintereinander in ein gemeinsames Gehäuse gebaut werden, wobei die Motorabtriebswellen z.B. in entgegengesetzte Axialrichtungen aus dem Gehäuse weisen können. Ebenso ist aber auch eine Anordnung axial nebeneinander in einem entsprechend ausgebildeten Gehäuse möglich und bevorzugt, so dass beide Motorabtriebswellen beispielsweise in die gleiche Axialrichtung weisen können.

Gemäß einer weiteren bevorzugten Ausführungsform der Erfindung ist es vorgesehen, dass die zweite Getriebeanordnung über eine Vielzahl von Gangstufen lastschaltbar ist. Daraus ergibt sich der Vorteil, dass die durch das erfindungsgemäße Verfahren bereitstellbare Lastschaltbarkeit nicht nur auf en Schaltvorgang von einer ganz spezifischen niedrigeren Gangstufe in eine ganz spezifische höhere Gangstufe gewährleistet ist, sondern für eine Vielzahl von Gangstufen. Dadurch wird der erfindungsgemäße Antriebsstrang flexibler. Dies bedingt ein hierfür entsprechend angepasstes Drehzahl-Drehmoment-Verhalten sowie ein entsprechend ausgebildete Leistungsfähigkeit insbesondere des ersten Elektromotors.

Besonders bevorzugt ist es vorgesehen, dass die zweite Getriebeanordnung über sämtliche Gangstufen lastschaltbar ist. Dies führt zu einer nochmals erhöhten Flexibilität des erfindungsgemäßen Antriebsstrangs.

Besonders bevorzugt ist es vorgesehen, dass die zweite Getriebeanordnung über drei zweite Kupplungen schaltbar ist, bzw. mittels des erfindungsgemäßen Verfahrens lastschaltbar ist. Dies hat sich in der praktischen Anwendung als guter Kompromiss zwischen Flexibilität durch eine Vielzahl von lastschaltbaren Gangstufen auf der einen Seite und dem benötigten Platzbedarf, dem Gewicht sowie den Herstellungskosten des Antriebsstrangs auf der anderen Seite bewährt.

Gemäß einer weiteren bevorzugten Ausführungsform der Erfindung ist es vorgesehen, dass der Arbeitsantrieb mindestens eine Hydraulikpumpe umfasst, deren hydraulische Leistung über einen Verschwenkwinkel einstellbar ist. Unabhängig davon ist die hydraulische Leistung natürlich auch über die Drehzahl der mindestens einen Hydraulikpumpe sowie über das Drehmoment an der mindestens einen Hydraulikpumpe einstellbar. Indem jedoch über den Verschwenkwinkel ein zusätzlicher Freiheitsgrad zum Einstellen der hydraulischen Leistung Zur Verfügung steht, eröffnet sich die Möglichkeit, die Drehzahl bzw. das Drehmoment des ersten Elektromotors während eines Schaltvorgangs weitgehend nach den Bedürfnissen des Fahrantriebs einzustellen, weil eine Beeinflussung der geänderten Drehzahl bzw. des geänderten Drehmoments des ersten Elektromotors auf die mindestens eine Hydraulikpumpe durch eine entsprechende Einstellung des Verschwenkwinkels ausgeglichen werden kann.

Gemäß einer weiteren bevorzugten Ausführungsform der Erfindung ist es vorgesehen, dass der Antriebsstrang dazu ausgebildet ist, das erfindungsgemäße Verfahren auszuführen.

Bevorzugt ist es vorgesehen, dass der erste Elektromotor bzw. der zweite Elektromotor weiterhin zum Rekuperieren von kinetischer Energie im Bremsbetrieb der Arbeitsmaschine ausgebildet sind. Durch die erfindungsgemäße über die erste Kupplung zwischen dem ersten Elektromotor und der zweiten Getriebeanordnung herstellbare Triebverbindung kann kinetische Energie nämlich vorteilhaft sowohl vom zweiten wie auch vom ersten Elektromotor rekuperiert werden. Dazu umfasst der Antriebsstrang weiterhin vorteilhafterweise einen elektrischen Energiespeicher, dem die durch den Rekuperationsbetrieb zugeführte elektrische Energie zugeführt werden kann. Im Rekuperationsbetrieb arbeiten der erste Elektromotor bzw. der zweite Elektromotor als Generatoren und wandeln mechanische, nämlich kinetische, Energie in elektrische Energie um. Diese elektrische Energie kann dem elektrischen Energiespeicher später im Bedarfsfalle wieder entnommen werden, um den ersten Elektromotor bzw. den zweiten Elektromotor zu versorgen. Zusätzlich kann es auch vorgesehen sein, dass der elektrische Energiespeicher über ein Ladekabel oder eine sonstige geeignete Ladevorrichtung, beispielsweise eine Induktionsladevorrichtung, mit externer elektrischer Energie ladbar ist. Die Verwendung des ersten Elektromotors bzw. des zweiten Elektromotors zum Rekuperieren reduziert außerdem den Verschleiß einer mechanischen Reibungsbremse.

Die Erfindung betrifft weiterhin eine Arbeitsmaschine, umfassend einen erfindungsgemäßen Antriebsstrang. Daraus ergeben sich die bereits im Zusammenhang mit dem erfindungsgemäßen Antriebsstrang beschriebenen Vorteile auch für die erfindungsgemäße Arbeitsmaschine.

Gemäß einer bevorzugten Ausführungsform der Erfindung ist es vorgesehen, dass die Arbeitsmaschine als Radlader ausgebildet ist.

Alternativ bevorzugt kann die Arbeitsmaschine auch als Dumper, Bagger, Teleskoplader oder Traktor ausgebildet sein.

Nachfolgend wird die Erfindung anhand von in den Figuren dargestellten Ausführungsformen beispielhaft erläutert.

Es zeigen:
- Fig. 1: beispielhaft und schematisch eine mögliche Ausführungsform eines erfindungsgemäßen Antriebsstrangs für eine Arbeitsmaschine,
- Fig. 2: beispielhaft eine weitere mögliche Ausführungsform eines erfindungsgemäßen Antriebsstrangs 1 für eine Arbeitsmaschine in Form eines Räderschemas in Form eines Blockschaltbilds und
- Fig. 3: beispielhaft und schematisch eine mögliche Ausführungsform eines erfindungsgemäßen Verfahrens zum Betreiben eines Antriebsstrangs für eine Arbeitsmaschine in Form eines Flussdiagramms.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

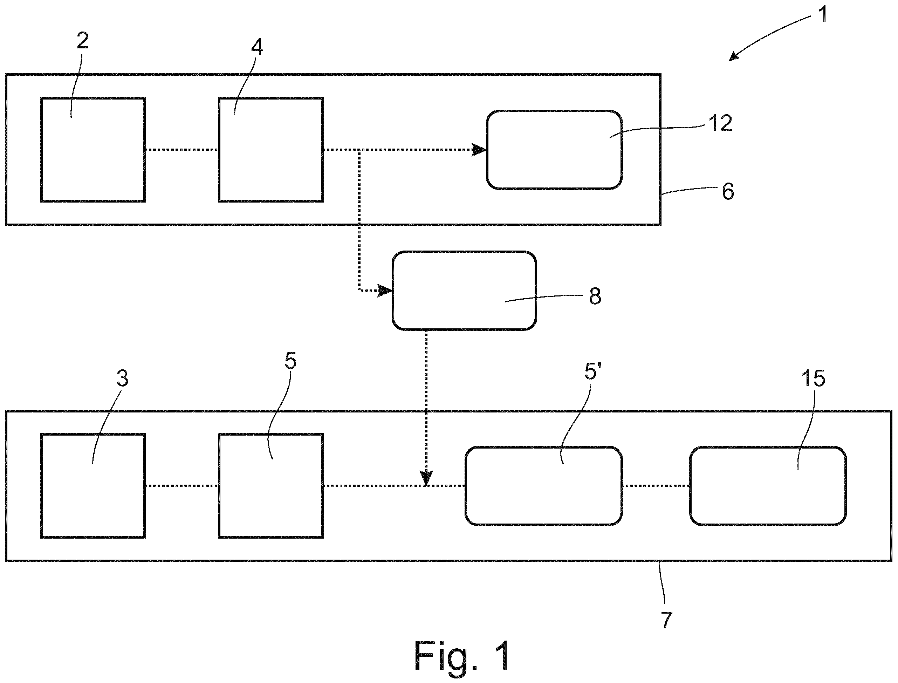

Fig. 1 zeigt beispielhaft und schematisch eine mögliche Ausführungsform eines erfindungsgemäßen Antriebsstrangs 1 für eine in Fig. 1 nicht dargestellte Arbeitsmaschine in Form eines Blockschaltbilds. Der beispielhaft gezeigte Antriebstrang 1 umfasst einen ersten Elektromotor 2 und einen zweiten Elektromotor 3 sowie eine erste Getriebeanordnung 4 und eine zweite Getriebeanordnung 5, 5'. Der erste Elektromotor 2 und der zweite Elektromotor 3 sind beispielsgemäß in einem gemeinsamen Gehäuse 11 angeordnet. Die zweite Getriebeanordnung 5, 5' besteht beispielsgemäß aus einer trieblich vorgelagerten Übersetzungsstufe 5 und einer mehrstufigen, lastschaltbaren Getriebeanordnung 5'. Der erste Elektromotor 2 und die erste Getriebeanordnung 4 sind einem Arbeitsantrieb 6 des Antriebsstrangs 1 zugeordnet, wobei der Arbeitsantrieb 6 beispielsgemäß auch eine ePTO-Schnittstelle 12 (electric Power Take Off - Schnittstelle) umfasst. Der zweite Elektromotor 3 und die zweite Getriebeanordnung 5 sind hingegen einem Fahrantrieb 7 des Antriebsstrangs 1 zugeordnet, wobei der Fahrantrieb 7 auch eine Abtriebswelle 13 umfasst. Über eine erste Kupplung 8 ist zudem zwischen dem ersten Elektromotor 2 und dem Fahrantrieb 7 eine Triebverbindung herstellbar, wobei die Triebverbindung beispielsgemäß konkret vom ersten Elektromotor 2 zu einer Stelle zwischen der Übersetzungsstufe 5 und der lastschaltbaren Getriebeanordnung 5' verläuft. Durch diese Triebverbindung wird es vorteilhaft ermöglicht, den Fahrantrieb 7 während eines Schaltvorgangs der zweiten Getriebeanordnung 5 vom ersten Elektromotor 2, welcher eigentlich dem Arbeitsantrieb 6 zugeordnet ist, antreiben zu lassen. Somit kann der zweite Elektromotor 3 trieblich vom Fahrantrieb 7 getrennt werden und eine Drehzahlsynchronisierung im Sinne einer Drehzahlerhöhung des zweiten Elektromotors 3 kann eingestellt bzw. eingeregelt werden, ohne dass ein Zugkraftverlust im Fahrantrieb 7 auftritt. Gleichzeitig kann der erste Elektromotor bereits eine Kupplungshälfte und mit der Kupplungshälfte verbundene Zahnräder und Wellen zu synchronisieren bzw. zu beschleunigen. Dementsprechend ist es bei Ausführung des erfindungsgemäßen Verfahrens nicht erforderlich, die Drehzahlsynchronisierung durch Reibarbeit zu erreichen, so dass entsprechende Kupplungen der zweiten Getriebeanordnung 5 vergleichsweise kleiner und kostengünstiger ausgelegt werden können als im Stand der Technik üblich.

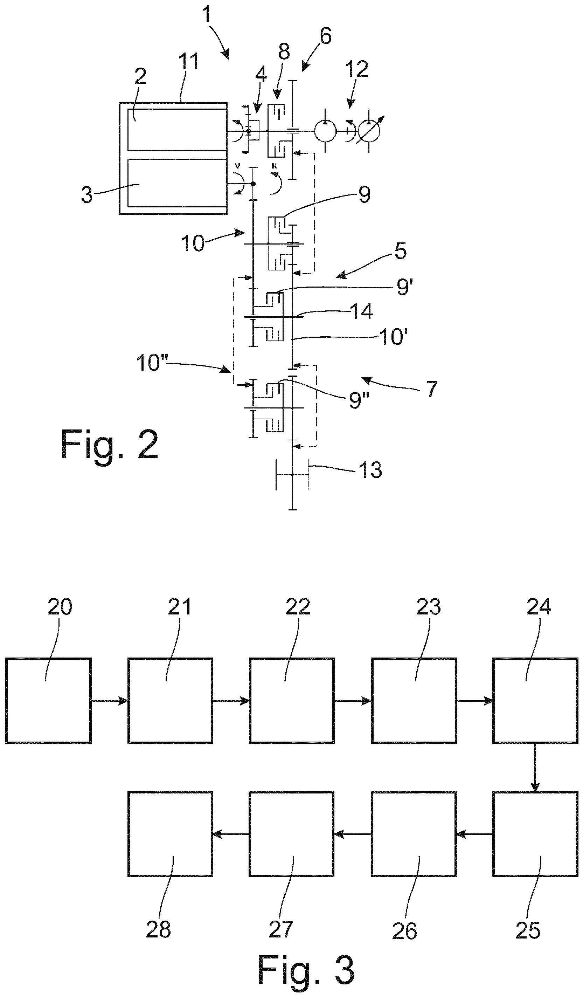

Fig. 2 zeigt beispielhaft eine weitere mögliche Ausführungsform eines erfindungsgemäßen Antriebsstrangs 1 für eine in Fig. 2 nicht dargestellte Arbeitsmaschine in Form eines Räderschemas. Beispielsgemäß umfasst der Antriebsstrangs 1 der Fig. 2 einen ersten Elektromotor 2 und einen zweiten Elektromotor 3, welche in einem gemeinsamen Gehäuse 9 angeordnet sind. Weiterhin umfasst der Antriebsstrang 1 der Fig. 2 eine erste Getriebeanordnung 4 und eine zweite Getriebeanordnung 5, wobei der erste Elektromotor 2 und die erste Getriebeanordnung 4 einem Arbeitsantrieb 6 des Antriebsstrangs 1 zugeordnet sind. Der zweite Elektromotor 3 und die zweite Getriebeanordnung 5 sind hingegen einem Fahrantrieb 7 des Antriebsstrangs 1 zugeordnet. Über eine erste Kupplung 8 ist zwischen dem ersten Elektromotor 2 und der zweiten Getriebeanordnung 5 eine Triebverbindung herstellbar, wobei die Triebverbindung beispielsgemäß vom ersten Elektromotor 2 zu einer Welle 14 der zweiten Getriebeanordnung 5 herstellbar ist. Somit kann der erste Elektromotor 2 bei geschlossener erster Kupplung 8 den Fahrantrieb 7 antreiben. Die zweite Getriebeanordnung 5 umfasst beispielsgemäß weiterhin drei zweite Kupplungen 9, 9' und 9", um mittels drei unterschiedlicher Stirnradstufen 10, 10', 10" drei schaltbare Gangstufen der zweiten Getriebeanordnung 5 bereitzustellen.

Fig. 3 zeigt beispielhaft und schematisch eine mögliche Ausführungsform eines erfindungsgemäßen Verfahrens zum Betreiben eines Antriebsstrangs 1 für eine Arbeitsmaschine in Form eines Flussdiagramms. Ein erster Elektromotor 2 des Antriebsstrangs 1 treibt über eine erste Getriebeanordnung 4 einen Arbeitsantrieb 6 der Arbeitsmaschine an und ein zweiter Elektromotor 3 des Antriebsstrangs 1 treibt über eine zweite Getriebeanordnung 5 einen Fahrantrieb 7 der Arbeitsmaschine an. In Verfahrensschritt 20 wird durch einen Bediener der Arbeitsmaschine ein Schaltvorgang aus einer höheren Gangstufe in eine niedrigere Gangstufe der zweiten Getriebeanordnung 5 eingeleitet. Das Einleiten des Schaltvorgangs erfolgt durch Betätigung eines entsprechenden Schaltelements der Arbeitsmaschine, beispielsgemäß durch einen Gangstufenwählhebel. In Verfahrensschritt 21 wird von einem Steuergerät geprüft, ob der erste Elektromotor 2, welcher dem Arbeitsantrieb 6 der Arbeitsmaschine 1 zugeordnet ist, neben dem Antrieb des Arbeitsantriebs 6 noch genügend Leistungsreserven aufweist, um den Schaltvorgang zu unterstützen. Beispielsgemäß ist dies der Fall, da der Arbeitsantrieb 6 gegenwärtig nicht angetrieben wird. Im folgenden Verfahrensschritt 22 wird daher eine Triebverbindung zwischen dem ersten Elektromotor 2 und dem Fahrantrieb 5 hergestellt, was durch Schließen einer ersten Kupplung 8 erfolgt. In Verfahrensschritt 23 ist die erste Kupplung 8 vollständig geschlossen und sowohl der erste Elektromotor 2 als auch der zweite Elektromotor 3 übertragen Leistung an den Fahrantrieb 7, treiben also den Fahrantrieb 7 an. In Verfahrensschritt 24 reduziert der zweite Elektromotor 3 seine an den Fahrantrieb 7 übertragene Leistung, wobei gleichzeitig der erste Elektromotor 2 seine an den Fahrantrieb 7 übertragene Leistung erhöht. Die Erhöhung der übertragenen Leistung durch den ersten Elektromotor 2 entspricht dabei genau der Reduzierung der übertragenen Leistung durch den zweiten Elektromotor 3, so dass eine Leistungsdifferenz zwischen einer Leistungsanforderung des Fahrantriebs 7 und einer vom zweiten Elektromotor 3 während des Schaltvorgangs bereitstellbaren Leistung überbrückt wird. Im darauf folgenden Verfahrensschritt 25 reduziert der zweite Elektromotor 3 seine an den Fahrantrieb 7 übertragene Leistung auf Null, indem eine entsprechende Kupplung geöffnet wird. Gleichzeit erhöht der erste Elektromotor 2 seine an den Fahrantrieb 7 übertragene Leistung weiter. Der Fahrantrieb 7 wird nun ausschließlich durch den ersten Elektromotor 2 angetrieben. In Schritt 26 beginnt der zweite Elektromotor 3 nun eine Drehzahlsynchronisierung im Sinne einer Drehzahlerhöhung. Die Drehzahlerhöhung erfolgt beispielsgemäß dadurch, dass der zweite Elektromotor 3 maximal bestromt wird. Sobald die notwendige Drehzahlerhöhung abgeschlossen ist und eine Drehzahlsynchronisierung erreicht ist, schließt die ebenfalls am Schaltvorgang beteiligte Kupplung 9' der zweiten Getriebeanordnung 5. Damit ist wieder eine Triebverbindung zwischen dem zweiten Elektromotor 3 und dem Fahrantrieb 7 hergestellt. In Verfahrensschritt 27 reduziert der erste Elektromotor 2 seine an den Fahrantrieb 7 übertragene Leistung, während der zweite Elektromotor 3 seine an den Fahrantrieb 7 übertragene Leistung im gleichen Maße erhöht. Die Reduzierung der übertragenen Leistung durch den ersten Elektromotor 2 entspricht in diesem Fall genau der Erhöhung der übertragenen Leistung durch den zweiten Elektromotor 3. Somit erhält der Fahrantrieb 7 eine konstante Leistungszufuhr. In Verfahrensschritt 28 schließlich überträgt der erste Elektromotor 2 keine Leistung mehr an den Fahrantrieb 7. Der Fahrantrieb 7 wird wieder ausschließlich vom zweiten Elektromotor 3 angetrieben. Die erste Kupplung 8 öffnet und unterbricht somit die Triebverbindung zwischen dem ersten Elektromotor 2 und der zweiten Getriebeanordnung 5 bzw. dem Fahrantrieb 7. Der Schaltvorgang ist damit abgeschlossen. Da während des gesamten Schaltvorgangs Leistung vom ersten Elektromotor 2 bzw. vom zweiten Elektromotor 3 an die zweite Getriebeanordnung 5 bzw. an den Fahrantrieb 7 übertragen wurde, wurde der Schaltvorgang unter Last ausgeführt. Der Antriebsstrang 1 ist also lastschaltfähig.

### Bezugszeichen

- 1: Antriebsstrang
- 2: erster Elektromotor
- 3: zweiter Elektromotor
- 4: erste Getriebeanordnung
- 5: zweite Getriebeanordnung
- 6: Arbeitsantrieb
- 7: Fahrantrieb
- 8: erste Kupplung
- 9, 9', 9": zweite Kupplung
- 10, 10', 10": Stirnradstufe
- 11: gemeinsames Gehäuse
- 12: ePTO
- 13: Abtriebswelle
- 14: Welle
- 20: Einleiten des Schaltvorgangs
- 21: Prüfen der Leistungsreserven
- 22: Herstellen der Triebverbindung
- 23: Vollständiges Schließen der ersten Kupplung
- 24: Reduzieren der Leistung des zweiten Elektromotors, Erhöhen der Leistung des ersten Elektromotors
- 25: weiteres Reduzieren der Leistung des zweiten Elektromotors, weiteres Erhöhen der Leistung des ersten Elektromotors
- 26: Drehzahlsynchronisierung des zweiten Elektromotors
- 27: Reduzieren der Leistung des ersten Elektromotors, Erhöhen der Leistung des zweiten Elektromotors
- 28: weiteres Reduzieren der Leistung des zweiten Elektromotors, weiteres Erhöhen der Leistung des ersten Elektromotors

## Patentansprüche

1. Verfahren zum Betreiben eines Antriebsstrangs (1) für eine Arbeitsmaschine, wobei ein erster Elektromotor (2) über eine erste Getriebeanordnung (4) einen Arbeitsantrieb (6) der Arbeitsmaschine antreibt,
wobei ein zweiter Elektromotor (3) über eine zweite Getriebeanordnung (5) einen Fahrantrieb (7) der Arbeitsmaschine antreibt und
wobei während eines Schaltvorgangs der zweiten Getriebeanordnung (5) aus einer höheren Gangstufe in eine niedrigere Gangstufe eine Drehzahlerhöhung des zweiten Elektromotors (3) erfolgt,
**dadurch gekennzeichnet, dass** während des Schaltvorgangs über eine erste Kupplung (8) eine Triebverbindung zwischen dem ersten Elektromotor (2) und dem Fahrantrieb (7) hergestellt wird (22), so dass der Fahrantrieb (7) während des Schaltvorgangs vom ersten Elektromotor (2) angetrieben wird (24, 25, 27, 28).

2. Verfahren nach Anspruch 1,
**dadurch gekennzeichnet, dass** der Schaltvorgang unter Last ausgeführt wird.

3. Verfahren nach mindestens einem der Ansprüche 1 und 2,
**dadurch gekennzeichnet, dass** der erste Elektromotor (3) den Fahrantrieb (7) und den Arbeitsantrieb (6) während des Schaltvorgangs gleichzeitig antreibt (24, 25, 27, 28).

4. Verfahren nach mindestens einem der Ansprüche 1 bis 3,
**dadurch gekennzeichnet, dass** eine bereitstellbare Leistung des ersten Elektromotors (2) dazu herangezogen wird, Kupplungshälften einer der niedrigeren Gangstufe zugeordneten Kupplung (9, 9', 9") zu synchronisieren.

5. Verfahren nach mindestens einem der Ansprüche 1 bis 4,
**dadurch gekennzeichnet, dass** eine bereitstellbare Leistung des zweiten Elektromotors (3) dazu herangezogen wird, um eine Drehzahl des zweiten Elektromotors (3) zu erhöhen.

6. Verfahren nach mindestens einem der Ansprüche 1 bis 5,
**dadurch gekennzeichnet, dass** der erste Elektromotor (2) den Fahrantrieb (7) nur insoweit antreibt, dass eine Leistungsdifferenz zwischen einer Leistungsanforderung des Fahrantriebs (7) und einer vom zweiten Elektromotor (3) während des Schaltvorgangs bereitstellbaren Leistung überbrückt wird (24, 25, 27, 28).

7. Verfahren nach Anspruch 6,
**dadurch gekennzeichnet, dass** der erste Elektromotor (2) den Fahrantrieb (7) nur insoweit antreibt, dass einer Leistungsanforderung des Arbeitsantriebs (6) während des Schaltvorgangs vollständig entsprochen werden kann.

8. Antriebsstrang (1) für eine Arbeitsmaschine,
umfassend einen ersten Elektromotor (2) und einen zweiten Elektromotor (3) sowie eine erste Getriebeanordnung (4) und eine zweite Getriebeanordnung (5),
wobei der erste Elektromotor (2) und die erste Getriebeanordnung (4) einem Arbeitsantrieb (6) der Arbeitsmaschine zugeordnet sind,
wobei der zweite Elektromotor (3) und die zweite Getriebeanordnung (5) einem Fahrantrieb (7) der Arbeitsmaschine zugeordnet sind undwobei über eine erste Kupplung (8) zwischen dem ersten Elektromotor (2) ) und dem Fahrantrieb (7) eine Triebverbindung herstellbar ist,
**dadurch gekennzeichnet, dass** der Antriebsstrang (1) dazu ausgebildet ist, ein Verfahren nach mindestens einem der Ansprüche 1 bis 7 auszuführen.

9. Antriebsstrang (1) nach Anspruch 8,
**dadurch gekennzeichnet, dass** der erste Elektromotor (2) und der zweite Elektromotor (3) in einem gemeinsamen Gehäuse (11) angeordnet sind.

10. Antriebsstrang (1) nach mindestens einem der Ansprüche 8 und 9,
**dadurch gekennzeichnet, dass** die zweite Getriebeanordnung (5) über eine Vielzahl von Gangstufen lastschaltbar ist.

11. Antriebsstrang (1) nach mindestens einem der Ansprüche 8 bis 10,
**dadurch gekennzeichnet, dass** der Arbeitsantrieb (6) mindestens eine Hydraulikpumpe (12) umfasst, deren hydraulische Leistung über einen Verschwenkwinkel einstellbar ist.

12. Arbeitsmaschine, umfassend einen Antriebsstrang (1) nach mindestens einem der Ansprüche 8 bis 11.

## Claims

1. Method for operating a drive train (1) for a mobile machine,
a first electric motor (2) driving a working drive (6) of the mobile machine via a first transmission arrangement (4),
a second electric motor (3) driving a propulsion drive (7) of the mobile machine via a second transmission arrangement (5), and
rotational speed increasing of the second electric motor (3) taking place during a shifting operation of the second transmission arrangement (5) out of a higher gear stage into a lower gear stage,
**characterized in that**, during the shifting operation, a drive connection is established (22) via a first clutch (8) between the first electric motor (2) and the propulsion drive (7), with the result that the propulsion drive (7) is driven (24, 25, 27, 28) by the first electric motor (2) during the shifting operation.

2. Method according to Claim 1,
**characterized in that** the shifting operation is carried out under power.

3. Method according to at least one of Claims 1 and 2, **characterized in that** the first electric motor (3) drives (24, 25, 27, 28) the propulsion drive (7) and the working drive (6) at the same time during the shifting operation.

4. Method according to at least one of Claims 1 to 3, **characterized in that** a providable power output of the first electric motor (2) is used to synchronize clutch halves of a clutch (9, 9', 9") which is assigned to the lower gear stage.

5. Method according to at least one of Claims 1 to 4, **characterized in that** a providable power output of the second electric motor (3) is used to increase a rotational speed of the second electric motor (3).

6. Method according to at least one of Claims 1 to 5, **characterized in that** the first electric motor (2) drives the propulsion drive (7) only to the extent that a power output difference between a power requirement of the propulsion drive (7) and a power output which can be provided by the second electric motor (3) during the shifting operation is bridged (24, 25, 27, 28).

7. Method according to Claim 6,
**characterized in that** the first electric motor (2) drives the propulsion drive (7) only to the extent that a power requirement of the working drive (6) can be met completely during the shifting operation.

8. Drive train (1) for a mobile machine,
comprising a first electric motor (2) and a second electric motor (3), and a first transmission arrangement (4) and a second transmission arrangement (5),
the first electric motor (2) and the first transmission arrangement (4) being assigned to a working drive (6) of the mobile machine,
the second electric motor (3) and the second transmission arrangement (5) being assigned to a propulsion drive (7) of the mobile machine, and a drive connection being able to be established via a first clutch (8) between the first electric motor (2) and the propulsion drive (7), **characterized in that** the drive train (1) is configured to carry out a method according to at least one of Claims 1 to 7.

9. Drive train (1) according to Claim 8,
**characterized in that** the first electric motor (2) and the second electric motor (3) are arranged in a common housing (11).

10. Drive train (1) according to at least one of Claims 8 and 9,
**characterized in that** the second transmission arrangement (5) can be power-shifted via a multiplicity of gear stages.

11. Drive train (1) according to at least one of Claims 8 to 10,
**characterized in that** the working drive (6) comprises at least one hydraulic pump (12), the hydraulic power of which can be adjusted via a swash angle.

12. Mobile machine, comprising a drive train (1) according to at least one of Claims 8 to 11.

## Revendications

1. Procédé permettant de faire fonctionner une chaîne cinématique (1) pour une machine de travail, un premier moteur électrique (2) entraînant un entraînement de travail (6) de la machine de travail par le biais d'un premier ensemble de transmission (4),
un deuxième moteur électrique (3) entraînant un système de propulsion (7) de la machine de travail par le biais d'un deuxième ensemble de transmission (5) et
une augmentation de régime du deuxième moteur électrique (3) ayant lieu pendant une opération de changement de vitesse du deuxième ensemble de transmission (5) d'un rapport de vitesse supérieur à un rapport de vitesse inférieur,
**caractérisé en ce que**, pendant l'opération de changement de vitesse, une liaison d'entraînement entre le premier moteur électrique (2) et le système de propulsion (7) est produite (22) par le biais d'un premier embrayage (8), de sorte que le système de propulsion (7) est entraîné (24, 25, 27, 28) par le premier moteur électrique (2) pendant l'opération de changement de vitesse.

2. Procédé selon la revendication 1,
**caractérisé en ce que** l'opération de changement de vitesse est effectuée sous charge.

3. Procédé selon au moins l'une des revendications 1 et 2,
**caractérisé en ce que** le premier moteur électrique (3) entraîne en même temps (24, 25, 27, 28) le système de propulsion (7) et l'entraînement de travail (6) pendant l'opération de changement de vitesse.

4. Procédé selon au moins l'une des revendications 1 à 3,
**caractérisé en ce qu'**une puissance, pouvant être fournie, du premier moteur électrique (2) est utilisée pour synchroniser des moitiés d'embrayage d'un embrayage (9, 9', 9") associé au rapport de vitesse inférieur.

5. Procédé selon au moins l'une des revendications 1 à 4,
**caractérisé en ce qu'**une puissance, pouvant être fournie, du deuxième moteur électrique (3) est utilisée pour augmenter un régime du deuxième moteur électrique (3).

6. Procédé selon au moins l'une des revendications 1 à 5,
**caractérisé en ce que** le premier moteur électrique (2) n'entraîne le système de propulsion (7) que dans la mesure où une différence de puissance entre une exigence de puissance du système de propulsion (7) et une puissance pouvant être fournie par le deuxième moteur électrique (3) pendant l'opération de changement de vitesse est comblée (24, 25, 27, 28).

7. Procédé selon la revendication 6,
**caractérisé en ce que** le premier moteur électrique (2) n'entraîne le système de propulsion (7) que dans la mesure où une exigence de puissance de l'entraînement de travail (6) peut être complètement satisfaite pendant l'opération de changement de vitesse.

8. Chaîne cinématique (1) pour une machine de travail, comprenant un premier moteur électrique (2) et un deuxième moteur électrique (3) ainsi qu'un premier ensemble de transmission (4) et un deuxième ensemble de transmission (5),
le premier moteur électrique (2) et le premier ensemble de transmission (4) étant associés à un entraînement de travail (6) de la machine de travail,
le deuxième moteur électrique (3) et le deuxième ensemble de transmission (5) étant associés à un système de propulsion (7) de la machine de travail et une liaison d'entraînement entre le premier moteur électrique (2) et le système de propulsion (7) pouvant être produite par le biais d'un premier embrayage (8),
**caractérisée en ce que** la chaîne cinématique (1) est réalisée pour mettre en œuvre un procédé selon au moins l'une des revendications 1 à 7.

9. Chaîne cinématique (1) selon la revendication 8, **caractérisée en ce que** le premier moteur électrique (2) et le deuxième moteur électrique (3) sont disposés dans un carter (11) commun.

10. Chaîne cinématique (1) selon au moins l'une des revendications 8 et 9,
**caractérisée en ce que** le deuxième ensemble de transmission (5) peut être commuté sous charge par le biais d'une pluralité de rapports de vitesse.

11. Chaîne cinématique (1) selon au moins l'une des revendications 8 à 10,
**caractérisée en ce que** l'entraînement de travail (6) comprend au moins une pompe hydraulique (12) dont la puissance hydraulique peut être réglée par le biais d'un angle de pivotement.

12. Machine de travail, comprenant une chaîne cinématique (1) selon au moins l'une des revendications 8 à 11.
